# EUROPÄISCHE PATENTSCHRIFT

(11) **EP 0 658 471 B1**
(45) Veröffentlichungstag und Bekanntmachung des Hinweises auf die Patenterteilung: **11.03.1998**
(21) Anmeldenummer: 94810684.4
(22) Anmeldetag: 02.12.1994
(51) Int. Cl.: B62D 33/04

(54) **Steckverbindung**
Plug-in connection
Connexion enfichable

(30) Priorität: 14.12.1993 CH 3726/93
(43) Veröffentlichungstag der Anmeldung: 21.06.1995
(73) Patentinhaber: Alusuisse Technology & Management AG, 8212 Neuhausen am Rheinfall (CH)
(72) Erfinder: Herz, Erich, D-78224 Singen (DE); Habich, Heiko, D-78224 Singen (DE)

(56) Entgegenhaltungen:
- GB-A- 1 148 752
- GB-A- 2 007 324
- US-A- 4 932 805
- PATENT ABSTRACTS OF JAPAN vol. 13 no. 267 (M-840) ,20.Juni 1989 & JP-A-01 067417 (SEISAKUSHO) 14.März 1989,

## Beschreibung

Vorliegende Erfindung betrifft eine Steckverbindung aus einem Knoten und wenigstens einem Hohlkammerprofil, wobei der Knoten wenigstens eine Anschlusspartie enthält und die Anschlusspartie wenigstens eine Ausnehmung für die Aufnahme eines Verbindungselementes aufweist, und das Hohlkammerprofil wenigstens eine Hohlkammer und wenigstens eine Ausnehmung für das Verbindungselement aufweist. Vorliegende Erfindung betriffl auch die Verwendung der Steckverbindungen. Eine derartige Steckverbindung ist aus der GB-A-1148752 bekannt.

Es ist bekannt, aus sogenannten Knoten und Hohlkammerprofilen dreidimensionale Formkörper, Rahmenkonstruktionen oder Gitterstrukturen herzustellen. Dies sind beispielsweise Baugruppen oder komplette Rahmen für den Fahrgastraum oder den Frontblock von Personenkraftwagen. In der Fachwelt sind solche Konstruktionen als "Space-Frame" bekannt und werden vornehmlich im Fahrzeugbau, z.B. für die Herstellung von Personenkraftwagen, eingesetzt. Die sogenannten Knoten stellen Verbindungsstücke mit einem oder zwischen mehreren Profilen dar. Die Profile können beispielsweise Strangpressprofile aus Aluminium sein und eine oder mehrere Hohlkammern aufweisen. Die Knoten können Anschlusspartien aufweisen, auf welche im Sinne einer Steckverbindung die Hohlkammerprofile aufgesteckt werden. Die Anschlusspartien der Knoten können Bohrungen aufweisen, und die Hohlkammerprofile können Bohrungen aufweisen, wobei beim Einstecken der Hohlkammerprofile auf die Anschlusspartien, die Bohrungen übereinander zu liegen kommen. Verbindungselemente, wie z.B. Schrauben, können die Bohrungen im Hohlkammerprofil und in der Anschlusspartie durchdringen und die Hohlkammerprofile können derart trennfest an den Anschlusspartien befestigt werden.

Es wurde gefunden, dass die Anschlusspartien der Knoten und die Hohlkammerprofile äusserst präzise gefertigt werden müssen, damit beim Überschieben der Hohlkammerprofile über die Anschlusspartien die Bohrungen derart übereinander zu liegen kommen, dass ohne weiteres eine Schraube die Bohrungen durchdringen kann. Diese Präzision kann nicht immer oder nur schwer erreicht werden.

Aufgabe vorliegender Erfindung ist es, diesen Nachteil zu beheben und eine Lösung vorzuschlagen, welche es ermöglicht, auf einfache Weise Hohlkammerprofile leicht und sicher an den Knoten zu befestigen und Toleranzen aus der Fertigung auf leichte Art und Weise auszugleichen.

Erfindungsgemäss wird dies dadurch erreicht, dass das Hohlkammerprofil auf die Anschlusspartie aufgesteckt ist und die Ausnehmungen im Hohlkammerprofil gegenüber den entsprechenden Ausnehmungen in der Anschlusspartie ein Übermass aufweisen und der Bereich der Ausnehmungen auf der Aussenseite des Hohlkammerprofiles mit einem Deckblech abgedeckt ist, das Deckblech für jedes Verbindungselement eine Ausnehmung in den Massen der Ausnehmung in der Anschlusspartie aufweist und zwischen dem Deckblech und dem Hohlkammerprofil ein Klebstoff angeordnet ist und der Klebstoff zwischen Deckblech und Hohlkammerprofil diese Teile trennfest verbindet.

Die Knoten können beispielsweise Formkörper sein, die durch eine Gusstechnologie, Schmiedetechnologie oder durch eine Extrusionstechnologie hergestellt wurden. Beispielsweise können die Knoten aus Aluminium oder dessen Legierungen hergestellt sein. Die Herstellung von Knoten kann beispielsweise durch Druckguss, Vakuumdruckguss, Kokillenguss etc., durch Schmieden oder durch Strangpressen erfolgen.

Jeder Knoten kann wenigstens eine Anschlusspartie, in der Regel zwei, drei oder vier Anschlusspartien, aufweisen. Aufjede Anschlusspartie kann ein Hohlkammerprofil aufgesteckt werden, wobei die Anschlusspartie z.B. 20 bis 100 mm tief in das zugehörige Hohlkammerprofil eingesteckt wird.

Quer zur Steckrichtung weist jede Anschlusspartie wenigstens eine Ausnehmung auf. Die Ausnehmung kann wenigstens eine Bohrung in der Anschlusspartie oder quer durch die Anschlusspartie sein oder kann ein Sackloch darstellen. Bevorzugt werden Bohrungen, die quer zur Steckrichtung durch die jeweilige Anschlusspartie durchgreifen. Zweckmässig enthält eine Anschlusspartie im Bereich ihres äusseren Endes an der unteren und oberen Begrenzung je eine Ausnehmung. Entsprechend weist das Hohlkammerprofil im Bereich der Steckverbindung Ausnehmungen auf, die den Ausnehmungen an der Anschlusspartie entsprechen.

Die Hohlkammerprofile sind zweckmässig aus Aluminium oder Aluminiumlegierung. Die Hohlkammerprofile können durch Strangpressverfahren hergestellt werden. Die Hohlkammerprofile weisen zweckmässig wenigstens eine Hohlkammer auf, deren innerer Querschnitt dem äusseren Querschnitt der Anschlusspartie des Knotens entspricht oder um ein Spaltmass grösser ist, damit die Hohlkammer über die Anschlusspartie als Steckverbindung aufgesteckt werden kann. Die Hohlkammerprofile können noch weitere Kammern oder auch offene Profilteile und Anformungen aufweisen. Die Hohlkammerprofile können beispielsweise im Querschnitt eine Höhe von 20 bis 250 mm, vorteilhaft von 30 bis 150 mm, und eine Breite von 10 bis 100 mm, vorteilhaft von 20 bis 75 mm, aufweisen.

Zur trennfesten Verbindung der Hohlkammerprofile und der Knoten sind Verbindungselemente vorgesehen. Solche Verbindungselemente können beispielsweise Schrauben, Bolzen oder Nieten sein. Zweckmässig sind Schraubverbindungen mit Schrauben oder mit Schraube und Mutter. Die Schrauben können entweder mittels Gewinde in einem Sackloch verschraubt werden oder die Bohrungen in den Anschlusspartien sind durchgehend und die Schraube durchdringt nacheinander die eine Hohlkammerprofilwand, die Anschlusspartie und die zweite, der ersten gegenüberliegende, Hohlkammerprofilwand. Die Schrauben können auch das Hohlkammerprofil und die Anschlusspartie durchdringen und mittels eines Nutensteins oder, z.B. parallelogrammförmigen, Klemmplättchens, welches im Hohlprofil angeordnet ist, festgezogen werden. Steckverbindungen nach vorliegender Erfindung können als Ausnehmungen in der Anschlusspartie hinterschnittene Nuten aufweisen, die Verbindungselemente können Schrauben und in den hinterschnittenen Nuten angeordnete Nutensteine oder Klemmplatten darstellen. Als Verbindungselemente können auch Nietverbindungen, wie durchgehende Nieten, sog. Huck-Bolts oder Blindnieten, angewendet werden. Stellen die Ausnehmungen in den Anschlusspartien Bohrungen dar, so entspricht der Durchmesser der Bohrungen zweckmässig dem Durchmesser des Verbindungselementes genau oder annähernd. Damit gelingt es, das Verbindungselement spielfrei in der Bohrung der Anschlusspartie zu lagern. Auf der Gewindeseite wird die Schraube in der Regel mit einer Mutter fixiert und gegebenenfalls können auch Federringe und dergl. vorgesehen sein. Die Hohlprofile weisen, entsprechend den Ausnehmungen in den Anschlusspartien, Ausnehmungen auf, welche in etwa gleiche Lage zu liegen kommen. Diese Ausnehmungen an den Hohlprofilen sind beispielsweise Bohrungen mit Übermass oder Langlöcher. Der Durchmesser der Bohrungen mit Übermass ist grösser als der Durchmesser der Bohrungen in den Anschlusspartien. Das Übermass kann beispielsweise 5 bis 30 % betragen. Jede Anschlusspartie kann z.B. mittels eines oder mehrerer Verbindungselemente, zweckmässig zwei, drei oder vier Verbindungselementen, mit dem Hohlkammerprofil verbunden werden.

Bevorzugt entspricht der Durchmesser der Ausnehmung in der Anschlusspartie und im Deckblech dem Durchmesser des Verbindungselementes, in der Regel mit der Toleranz eines geringen Spaltmasses, und der Durchmesser der Ausnehmung im Hohlkammerprofil ist grösser als der Durchmesser des Verbindungselementes. Zweckmässig sind die Ausnehmungen Bohrungen. Die Bohrungen können beispielsweise einen Durchmesser von 3 bis 30 mm, vorzugsweise von 8 bis 15 mm, aufweisen.

Auf den Aussenseiten der Hohlkammerprofile im Bereich der Ausnehmungen im Hohlprofil werden Deckbleche angeordnet, die Ausnehmungen aufweisen, die den Ausnehmungen der Anschlusspartie in der Anordnung, der Gestalt und den Massen entsprechen. Die Deckbleche werden vorteilhaft beidseitig aussen am jeweiligen Hohlkammerprofil spiegelsymmetrisch angeordnet. Sind zur Befestigung des Hohlkammerprofils an der Anschlusspartie mehrere Verbindungselemente vorgesehen, so überdeckt ein einziges Deckblech zweckmässig die Ausnehmungen auf einer Seite des Hohlprofils. In der Regel sind diese Ausnehmungen Bohrungen, deren Innendurchmesser dem Aussendurchmesser des Verbindungselementes entspricht, d.h. das Verbindungselemnet kann das Deckblech spielfrei oder mit geringem Spaltmass durchdringen. Somit sind die Verbindungselemente im Deckblech und in der Anschlusspartie spielfrei oder in wesentlichen spielfrei, angeordnet. Die Grösse der Deckbleche wird vorteilhaft so gewählt, dass die Ausnehmungen z.B. 3 bis 50 mm vom Deckblechaussenrand entfernt sind. Die Deckbleche können beispielsweise aus Aluminium oder dessen Legierungen, Eisen, Stahl, Buntmetallen etc. sein. Die Dicke kann z.B. 0,1 bis 3 mm, vorzugsweise 0,3 bis 2 mm, betragen.

Das Deckblech wird über eine Klebstoffschicht aussen am Hohlprofil angeordnet. Die Klebstoffschicht kann beispielsweise eine Klebefolie oder ein lösungsmittelhaltiger oder lösungsmittelfreier oder wasserbasierender Ein- oder Zweikomponenten-Klebstoff sein. Die Klebstoffe können aus der Reihe der Polyurethan-Klebstoffe, der Styrolbutadien-Klebstoffe, der Polyamid-Klebstoffe, der Ethylvinylacetat-Klebstoffe, der Polyester-Klebstoffe, der Klebstoffe aus PVC mit Weichmachern und Haftvermittlern, der Kautschuke oder Polyacrylate, des Polychloroprens, des Vinylacetats, des Vinylchlorids oder des Vinylidenchlorids und deren Copolymeren oder Reaktionsklebstoffe, enthaltend Epoxide und Säureanhydride, Epoxide und Polyamide, Polyisocyanate und Polyole oder Cyanoacrylate, ferner Methylacrylate, Polyesterharze mit Styrol oder mit Acrylaten usw. ausgewählt werden. Klebefolien können auch Polyolefine, wie z.B. Polyethylene enthalten oder daraus bestehen. Der Klebstoff kann beispielsweise als Folie, z.B. in einer Dicke von 0,8 bis 1,0 mm angewendet werden oder der Klebstoff kann flüssig, zäh, viskos oder pastös sein und durch Streichen, Rakeln, Rollen oder Sprühen in Mengen von z.B. 1 bis 100 g/m² aufgetragen werden.

Insbesondere zweckmässig ist ein Kontaktklebstoff. Der Kontaktklebstoff kann sich sowohl auf der Aussenseite des Hohlkammerprofiles und besonders zweckmässig auf der nach innen zu liegen kommenden Seite des Deckbleches vollflächig oder teilfächig angeordnet werden. Das Deckblech kann die Bereiche eines oder mehrerer der Ausnehmungen gleichzeitig überdecken und kann rund oder polygonal, d.h. insbesondere rechteckig, sein.

In einer bevorzugten Weise werden Baugruppen derart gefügt, dass zuerst das Hohlkammerprofil über die entsprechende Anschlusspartie gesteckt wird, wobei die Ausnehmung oder die Ausnehmungen der Anschlusspartie und die Ausnehmung oder die entsprechenden Ausnehmungen des Hohlkammerprofiles übereinander zu liegen kommen. In der Regel kommen wenigstens zwei Ausnehmungen in der Anschlusspartie und entsprechend die vier Ausnehmungen eines Hohlkammerprofils derart übereinander zu liegen, dass zwei Verbindungselemente die Ausnehmungen durchdringen können. Es werden dann zwei mit Klebstoff vorbehandelte Deckbleche vorbereitet, wobei durch die Ausnehmungen in einem Deckblech bereits die Verbindungselemente, wie beispielsweise Schrauben, durchgestossen werden können und die Schrauben dann das Hohlkammerprofil von der einen Seite her, dann die Anschlusspartie und schliesslich die andere Seite des Hohlkammerprofiles durchdringen. Auf die überstehenden Schraubenteile kann ein zweites Deckblech aufgeschoben werden. Auf die vorstehenden Gewindeteile der Schrauben können gegebenenfalls Unterlagsscheiben aufgelegt und die Muttern aufgeschraubt werden. Vor dem endgültigen Festziehen kann auch das Hohlkammerprofil. gegenüber der Anschlusspartie noch mehr oder minder geringem Masse gerichtet werden. Beim Anziehen der Schraubverbindung bildet der Klebstoff zwischen dem Deckblech und dem Hohlkammerprofil seine Wirkung aus und verbindet sich trennfest mit dem Hohlkammerprofil. Durch die Klebkraft einerseits und die Spannkraft der Schraubverbindung anderseits wird das Hohlkammerprofil trennfest mit der Anschlusspartie verbunden. Durch die Masshaltigkeit der Ausnehmungen im Deckblech und dessen feste Verbindung mit dem Hohlkammerprofil sowie der Masshaltigkeit der Ausnehmung in der Anschlusspartie wird ein Formschluss erreicht.

Bei vorliegender Steckverbindung handelt es sich insbesondere um eine Steckverbindung mit Toleranzausgleich.

Vorliegende Erfindung betrifft auch Formkörper, tragende und nichtselbsttragende Rahmenkonstruktionen, Gitterstrukturen oder Baugruppen Rahmen enthaltend wenigstens eine Steckverbindung nach vorliegender Erfindung. Gitterstrukturen, Baugruppen oder Rahmen können beispielsweise Teile von Karosserien oder Karosseriegerüsten oder ganze Karosseriegerüste von Personenkraftwagen oder Nutzfahrzeugen oder auch schienengebundenen Fahrzeugen sein. Baugruppen umfassen beispielsweise die Hauptrahmen, Frontrahmen, Heckrahmen, Rahmenteile für einen modularen Aufbau usw. Bevorzugt werden die genannten Gegenstände in der Space-Frame-Technik verwendet.

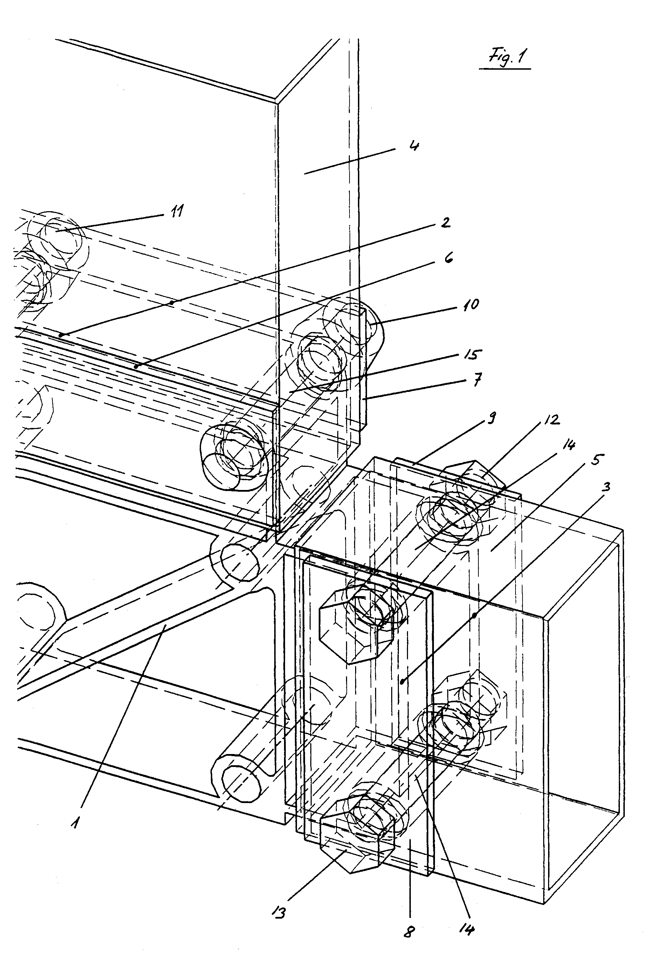

Die Figur 1 zeigt beispielhaft eine Ausführungsform einer Steckverbindung nach vorliegender Erfindung.

Ein Knoten (1) weist hier sichtbar zwei Anschlusspartien (2, 3) auf. Der Knoten kann beispielsweise ein Strangpressprofil sein. Zwei Hohlkammerprofile (4, 5) sind auf die Anschlusspartien (2, 3) aufgesteckt. Auf den Hohlkammerprofilen (4, 5) sind aussen, im Bereich der Verbindungselemente, beidseitig Deckbleche (6, 7) resp. (8, 9) angeordnet. Zwischen den Deckblechen und den Hohlkammerprofilen sind Klebstoffschichten vorhanden.

Als Verbindungselemente sind beispielhaft Nietverbindungen (10, 11), d.h. sogenannte Huck-bolts, und Schraubverbindungen (12, 13) angedeutet. Die Nieten, resp. Schrauben, durchdringen die in Knoten vorhandenen, durch das Strangpressen erzeugten Langlöcher (14, 15). Die Verbindungselemente (12, 13) durchdringen demnach zuerst z.B. das Deckblech (8), dann die eine Seitenwand des Hohlkammerprofils (5), das Langloch (14 resp. 15), die andere Seitenwand des Hohlkammerprofils (5) und schliesslich des Deckblechs (9). Über die Deckbleche (6, 7, 8, 9) stützen sich die Nietenköpfe, resp. Schrauben- und Mutternköpfe, ab. Ein Formschluss wird zwischen den Verbindungselementen, den Deckblechen und den Langlöchern erreicht.

## Patentansprüche

1. Steckverbindung aus einem Knoten (1) und wenigstens einem Hohlkammerprofil (4, 5), wobei der Knoten wenigstens eine Anschlusspartie (2, 3) enthält und die Anschlusspartie wenigstens eine Ausnehmung (14, 15) für die Aufnahme eines Verbindungselementes (12, 13) aufweist, und das Hohlprofil wenigstens eine Hohlkammer und wenigstens eine Ausnehmung für das Verbindungselement (12, 13) aufweist,
dadurch gekennzeichnet, dass
das Hohlkammerprofil auf die Anschlusspartie aufgesteckt ist und die Ausnehmungen im Hohlkammerprofil gegenüber der entsprechenden Ausnehmung in der Anschlusspartie ein Übermass aufweisen und der Bereich der Ausnehmung auf der Aussenseite des Hohlkammerprofils mit einem Deckblech (8) abgedeckt ist, das Deckblech für jedes Verbindungselement eine Ausnehmung in den Massen der Ausnehmung in der Anschlusspartie aufweist und zwischen dem Deckblech und dem Hohlkammerprofil ein Klebstoff angeordnet ist und der Klebstoff zwischen Deckblech und Hohlkammerprofil diese Teile trennfest verbindet.

2. Steckverbindung gemäss Anspruch 1, dadurch gekennzeichnet, dass das Verbindungselement eine Schraubverbindung oder eine Nietverbindung ist.

3. Steckverbindung gemäss Anspruch 1, dadurch gekennzeichnet, dass die Ausnehmungen in der Anschlusspartie hinterschnittene Nuten sind und die Verbindungselemente Schrauben und in den hinterschnittenen Nuten angeordnete Nutensteine oder Klemmplatten darstellen.

4. Steckverbindung gemäss Anspruch 1, dadurch gekennzeichnet, dass der Durchmesser der Ausnehmung in der Anschlusspartie und im Deckblech dem Durchmesser dem Verbindungselement entsprechen und der Durchmesser der Ausnehmung im Hohlkammerprofil grösser ist als der Durchmesser des Verbindungselementes.

5. Steckverbindung gemäss Anspruch 1, dadurch gekennzeichnet, dass die Ausnehmung ein Sackloch ist.

6. Formkörper, tragende oder nichtselbsttragende Rahmenkonstruktionen, Gitterstrukturen oder Baugruppen enthaltend Steckverbindungen nach Anspruch 1.

## Claims

1. Inserted joint consisting of a joint (1) and at least one hollow section (4, 5), the joint comprising at least one connecting part (2, 3) and the connecting part having at least one recess (14, 15) for receiving a connecting element (12, 13), and the hollow section having at least one hollow space and at least one recess for the connecting element (12, 13), characterised in that the hollow section is slipped on to the connecting part and the recesses in the hollow section are oversized compared to the corresponding recess in the connecting part and the region of the recess on the outer face of the hollow section is covered by a cover plate (8), the cover plate has a recess the size of the recess in the connecting part for each connecting element, an adhesive is arranged between the cover plate and the hollow section and the adhesive between the cover plate and the hollow section firmly connects these components.

2. Inserted joint according to claim 1, characterised in that the connecting element is a screwed connection or a riveted connection.

3. Inserted joint according to claim 1, characterised in that the recesses in the connecting part are undercut grooves and the connecting elements are screws and sliding blocks or clamping plates arranged in the undercut grooves.

4. Inserted joint according to claim 1, characterised in that the diameter of the recess in the connecting part and in the cover plate corresponds to the diameter of the connecting element and the diameter of the recess in the hollow section is larger than the diameter of the connecting element.

5. Inserted joint according to claim 1, characterised in that the recess is a blind hole.

6. Moulded parts, load-bearing or non-load-bearing frame constructions, latticed structures or structural components comprising inserted joints according to claim 1.

## Revendications

1. Connexion enfichable composée d'un noeud (1) et d'au moins un profilé creux à chambre (4, 5), le noeud contenant au moins un bloc de raccordement (2, 3) et le bloc de raccordement présentant au moins un évidement (14, 15) pour recevoir un élément de connexion (12, 13) et le profilé creux présentant au moins une chambre creuse et au moins un évidement pour l'élément de connexion (12, 13),
caractérisé par le fait
que le profilé creux à chambre est enfiché sur le bloc de raccordement et que les évidements prévus dans le profilé creux à chambre présentent une surcote par rapport à l'évidement correspondant prévu dans le bloc de raccordement et que la zone de l'évidement sur la face extérieure du profilé creux à chambre est recouverte d'une tôle de recouvrement (8), que la tôle de recouvrement présente, pour chaque élément de liaison, un évidement dans les dimensions de l'évidement prévu dans le bloc de raccordement et qu'entre la tôle de recouvrement et le profilé creux à chambre est disposé un adhésif et que l'adhésif disposé entre la tôle de recouvrement et le profilé creux à chambre relie ces pièces sans possibilité de séparation.

2. Connexion enfichable selon la revendication 1, caractérisée par le fait que l'élément de connexion est une connexion à vis ou une connexion à rivet.

3. Connexion enfichable selon la revendication 1, caractérisée par le fait que les évidements dans le bloc de raccordement sont des rainures en contre-dépouille et que les éléments de connexion représentent des vis et des coulisseaux ou des crapauds disposés dans les rainures en contre-dépouille.

4. Connexion enfichable selon la revendication 1, caractérisée par le fait que le diamètre de l'évidement prévu dans le bloc de raccordement et de celui prévu dans la tôle de raccordement correspond au diamètre de celui prévu dans l'élément de connexion et que le diamètre de l'évidement prévu dans le profilé creux à chambre est supérieur au diamètre de l'élément de connexion.

5. Connexion enfichable selon la revendication 1, caractérisée par le fait que l'évidement est un trou borgne.

6. Corps en forme, constructions en cadre, porteuses ou non autoporteuses, structures en treillis ou ensembles contenant des connexions enfichables selon la revendication 1.
